# EUROPÄISCHE PATENTSCHRIFT

(11) **EP 1 344 583 B1**
(45) Veröffentlichungstag und Bekanntmachung des Hinweises auf die Patenterteilung: **16.06.2004**
(21) Anmeldenummer: 03002764.3
(22) Anmeldetag: 07.02.2003
(51) Int. Cl.: B21D 7/06, B21D 11/18, B62D 21/02

(54) **Vorrichtung und Verfahren zur Herstellung eines länglichen Profilteils**
Apparatus and method for producing an elongated profile
Dispositif et procédé pour la production d'un profilé allongé

(30) Priorität: 12.03.2002 DE 10210807
(43) Veröffentlichungstag der Anmeldung: 17.09.2003
(73) Patentinhaber: Kronenberg Profil GmbH, 42799 Leichlingen (DE)
(72) Erfinder: Bültmann Paul, 59846 Sundern (DE)
(74) Vertreter: Basfeld, Rainer, Dr. Dipl.-Phys.

(56) Entgegenhaltungen:
- US-A- 4 403 495
- US-A- 5 855 394
- PATENT ABSTRACTS OF JAPAN vol. 011, no. 215 (M-606), 11. Juli 1987 (1987-07-11) -& JP 62 033019 A (NISSAN MOTOR CO LTD), 13. Februar 1987 (1987-02-13)

## Beschreibung

Die vorliegende Erfindung betrifft eine Vorrichtung für die Herstellung eines länglichen Profilteils gemäß dem Oberbegriff des Anspruchs 1. Weiterhin betrifft die vorliegende Erfindung ein Verfahren zur Herstellung dieses Profilteils gemäß dem Oberbegriff des Anspruchs 10.

Ein Profilteil der vorgenannten Art kann beispielsweise einen im wesentlichen U-förmigen Querschnitt mit mindestens zwei Abschnitten unterschiedlicher Tiefe des U-Profils sein. Derartige Profilteile finden beispielsweise als Längsträger in Kraftfahrzeugen, insbesondere in Kleintransportern Verwendung, wobei ein vorderer erster Abschnitt eine größere Dicke und damit eine größere Tiefe des U-Profils aufweist, wohingegen ein zweiter hinterer Abschnitt eine geringere Dicke und damit eine geringere Tiefe des U-Profils aufweist. Beispielsweise kann sich dabei der hintere Abschnitt geringerer Tiefe des U-Profils von den Hinterrädern nach hinten erstrecken, wohingegen sich der Abschnitt mit größerer U-Profiltiefe und damit mit größerer Stabilität von den Hinterrädern nach vorne erstrecken kann.

Gemäß dem Stand der Technik werden derartige Profilteile relativ aufwendig durch Tiefziehen mit entsprechenden Tiefziehmaschinen hergestellt. Ein derartiges Verfahren erweist sich als vergleichsweise aufwendig und kostenintensiv.

Eine Vorrichtung und ein Verfahren der eingangs genannten Art sind aus dem US-Patent 4,403,495 bekannt. Dieses US-Patent zeigt die Herstellung eines Karosserielängsträgers mit einem U-Profil, das einen in der Mitte nach oben gebogenen Abschnitt aufweist. Dieser nach oben gebogene Abschnitt wird mittels einer Prägeeinheit hergestellt. Sowohl in dem nach oben gebogenen Abschnitt als auch in den davor und dahinterliegenden Abschnitten hat das U-Profil nach dem Prägen den gleichen Querschnitt, so dass das U-Profil sowohl auf seiner Oberseite als auch auf seiner Unterseite im Bereich des nach oben gebogenen Abschnittes eine Stufe aufweist. Zur Herstellung des U-Profils findet sich in dem vorgenannten US-Patent kein Hinweis.

Das der vorliegenden Erfindung zugrunde liegende Problem ist die Schaffung einer Vorrichtung und eines Verfahrens der eingangs genannten Art, mit denen sich ein Profilteil kostengünstig und/oder einfach herstellen lässt.

Dies wird erfindungsgemäß hinsichtlich der Vorrichtung durch eine Vorrichtung der eingangs genannten Art mit den kennzeichnenden Merkmalen des Anspruchs 1 sowie hinsichtlich des Verfahrens durch ein Verfahren der eingangs genannten Art mit den kennzeichnenden Merkmalen des Anspruchs 10 erreicht. Die Unteransprüche betreffen bevorzugte Weiterbildungen der Erfindung.

Vermittels der erfindungsgemäßen Vorrichtung ist es somit möglich aus Bandmaterial, insbesondere aus Stahlband ein erfindungsgemäßes Profilteil durch Wälzen, Prägen und Besäumen herzustellen.

Das Profilteil kann somit ein Kaltwalzprofilteil sein. Eine Herstellung durch Kaltwalzen ist wesentlich einfacher und/oder kostengünstiger realisierbar als eine Herstellung durch Tiefziehen.

In Bearbeitungsrichtung hinter der Prägeeinheit ist eine Besäumeinheit vorgesehen, mit der die Ränder der gegeneinander versetzten Abschnitte besäumt werden können, insbesondere die oberen Ränder auf im wesentlichen gleicher Höhe abgeschnitten werden können. Das fertige Profilteil kann zumindest abschnittsweise als U-Profil und/oder L-Profil und/oder Z-Profil und/oder T-Profil ausgeführt sein. Beispielsweise für den Fall, dass das Profilteil zumindest abschnittsweise einen im wesentlichen U-förmigen Querschnitt mit über seiner Längserstreckung mindestens zwei unterschiedlichen Tiefen des U-Profilteils aufweist, wird ein U-profiliertes Band abschnittsweise derart geprägt, dass die Böden des U-Profils in mindestens zwei Abschnitten gegeneinander versetzt sind. Das derart geprägte profilierte Band kann insbesondere dadurch besäumt werden, dass die Ränder der U-Schenkel der Abschnitte mit gegeneinander versetzten Böden auf im wesentlichen gleicher Höhe abgeschnitten werden. Auf diese Weise kann durch einfaches Prägen und Besäumen ein U-Profil erstellt werden, dass zumindest zwei Abschnitte unterschiedlicher U-Profiltiefe aufweist.

Erfindungsgemäß ist vorgesehen, dass in Bearbeitungsrichtung vor der Prägeeinheit eine Profilierungseinheit angeordnet ist, vermittels der aus einem flachen Band durch Wälzen ein profiliertes Band erzeugt werden kann. Das auf diese Weise erzeugte beispielsweise U-profilierte oder L- oder Z- oder T-profilierte Band kann dann in der Prägeeinheit mit dem vorgenannten Versatz versehen werden.

Es besteht weiterhin die Möglichkeit, dass die erfindungsgemäße Vorrichtung mindestens eine Stanzeinheit umfasst, mit der Bohrungen und/oder Durchzüge in das zu fertigende Profilteil eingebracht werden können. Weiterhin kann die Vorrichtung mindestens eine Schere umfassen, mit der die zu fertigenden Profilteile abgelängt werden können.

Gemäß einer bevorzugten Ausführungsform der vorliegenden Erfindung ist in Bearbeitungsrichtung der Vorrichtung hinter der Prägeeinheit oder hinter der Besäumeinheit ein Hut-Profilierungseinheit vorgesehen, mit der die oberen Ränder der Schenkel des als U-Profil ausgeführten Bandes umgebogen werden können, so dass insbesondere ein Hut-Profil entsteht. Die umgebogenen oberen Ränder dieses Hut-Profils sind insbesondere zur Festlegung des erfindungsgemäßen Profilteils in Anwendung beispielsweise als Längsträger in einem Kraftfahrzeug verwendbar.

Es besteht weiterhin die Möglichkeit, dass die Vorrichtung eine Haspel umfasst, von der ein Band abgewickelt werden kann und insbesondere der Profilierungseinheit zugeführt werden kann. Weiterhin kann zwischen der Haspel und der Profilierungseinheit eine Bandschweißanlage angeordnet sein, mit der einzelne Coils des Bandes miteinander verschweißt werden können. Durch diese Einheiten wird eine komplette Vorrichtung zur Herstellung der erfindungsgemäßen Profilteile gegeben, die zur effektiven Produktion großer Mengen derartiger Profilteile geeignet ist.

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Darin zeigen
- Fig. 1a: eine Seitenansicht im Detail eines erfindungsgemäßen Profilteils;
- Fig. 1b: eine Schnittansicht gemäß den Pfeilen Ib - Ib in Fig. 1a;
- Fig. 1c: eine Schnittansicht gemäß den Pfeilen Ic - Ic in Fig. 1a;
- Fig. 2: eine erste schematische Teilseitenansicht einer erfindungsgemäßen Vorrichtung;
- Fig. 3: eine zweite schematische Teilseitenansicht der erfindungsgemäßen Vorrichtung, wobei sich Fig. 3 auf der rechten Seite von Fig. 2 an diese anschließt;
- Fig. 4: eine dritte schematische Teilseitenansicht der erfindungsgemäßen Vorrichtung, wobei sich Fig. 4 auf der rechten Seite von Fig. 3 an diese anschließt;
- Fig. 5: eine vierte schematische Teilansicht der erfindungsgemäßen Vorrichtung, wobei sich Fig. 5 auf der rechten Seite von Fig. 4 an diese anschließt.

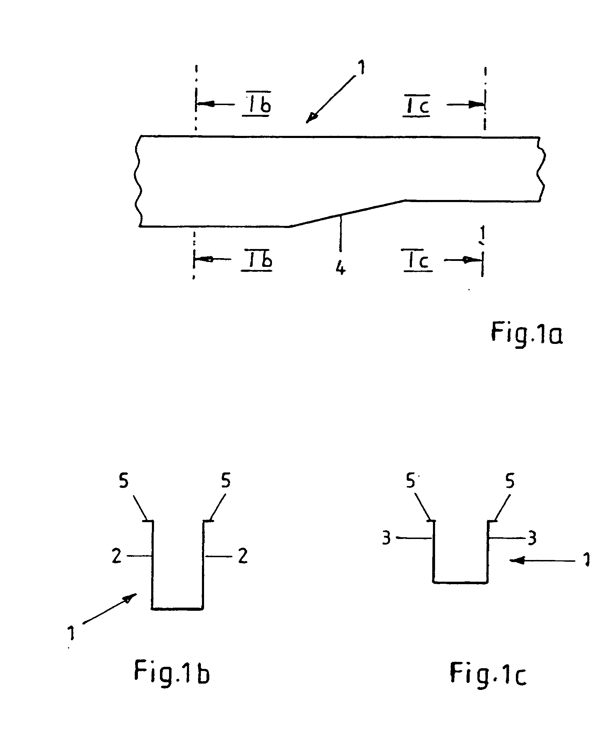

Aus Fig. 1a bis Fig. 1c ist ein erfindungsgemäßes Profilteil 1 ersichtlich, das einen im wesentlichen U-förmigen Querschnitt aufweist. In Fig. 1 b und in Fig. 1c sind Querschnitte an unterschiedlichen Stellen über die Längserstreckung des Profilteils 1 (siehe dazu Fig. 1 a) ersichtlich. Hierbei zeigt sich, dass im Bereich der Fig. 1 b die U-Schenkel 2 eine größere Länge aufweisen als die U-Schenkel 3 im Bereich des Querschnitts gemäß Fig. 1c. Aus Fig. 1a ist ersichtlich, dass diese Querschnittsreduzierung in einem in Fig. 1a etwa mittigen Abschnitt 4 kontinuierlich von einem Bereich größerer U-Profiltiefe (siehe Fig. 1b) zu einem Bereich kleinerer U-Profiltiefe (siehe Fig. 1 c) erfolgt. Die U-Schenkel 2, 3 sind an ihrem von dem Boden des U-Profils abgewandten Ende umgebogen, so dass sich unter einem Winkel von etwa 90° von den U-Schenkeln 2, 3 und voneinander weg erstreckende Ränder 5 ergeben. Diese umgebogenen Ränder 5 werden auch als Hut-Profilierung des Profilteils 1 bezeichnet. Das Profilteil 1 ist aus Metall, insbesondere aus Stahl, gefertigt.

Ein aus Fig. 1a bis Fig. 1c ersichtliches Profilteil 1 kann insbesondere als Längsträger für ein Kraftfahrzeug, insbesondere für einen Kleintransporter Verwendung finden. Hierbei wird aus Gründen der Materialersparnis der Bereich reduzierten Querschnitts des Profilteils 1 oberhalb und hinter den Hinterrädern des Kraftfahrzeugs Verwendung finden, wohingegen sich der Bereich nicht reduzierten Querschnitts des Profilträgers 1 von den Hinterrädern nach vorne erstreckt.

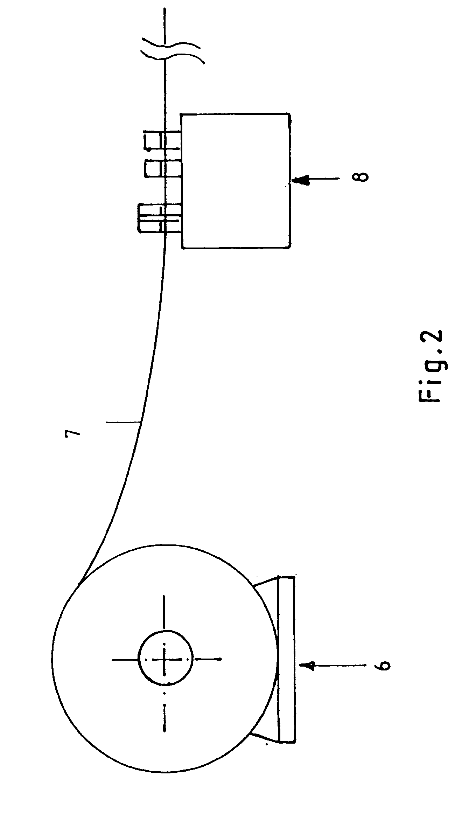

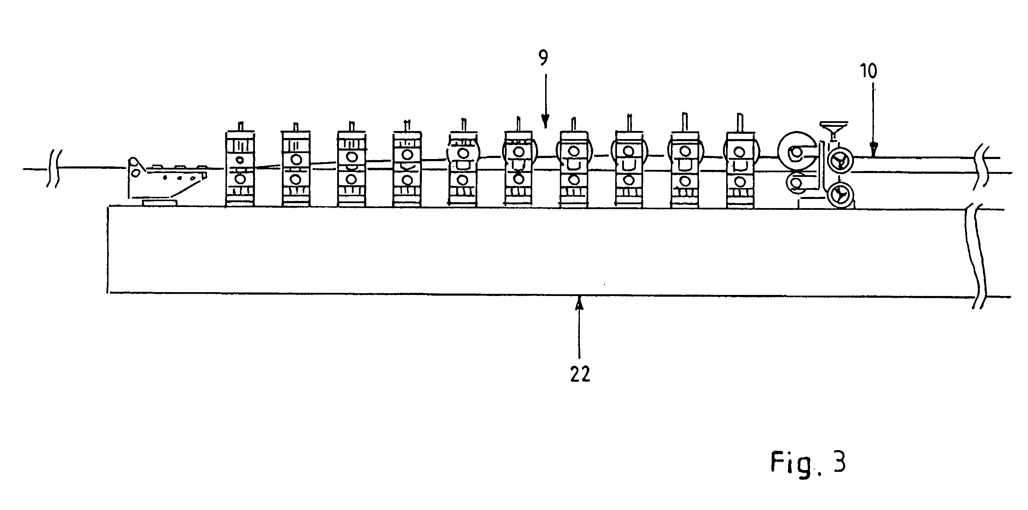

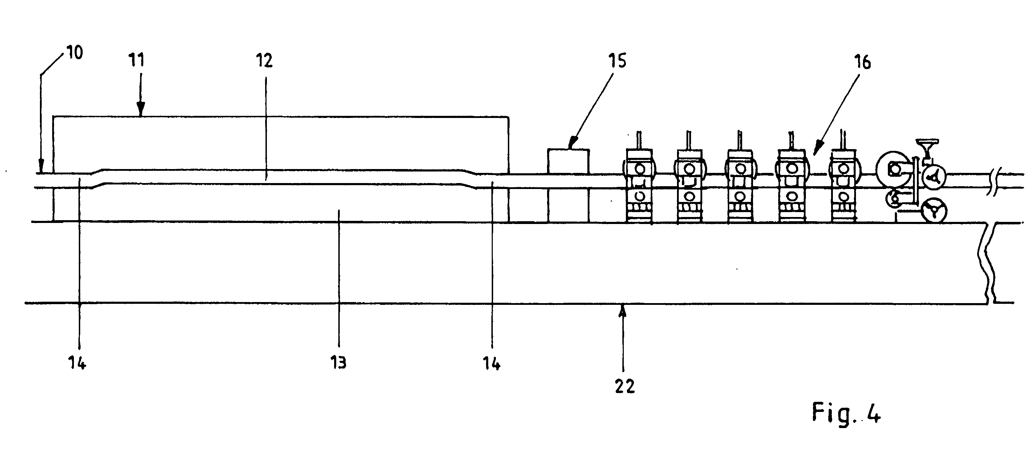

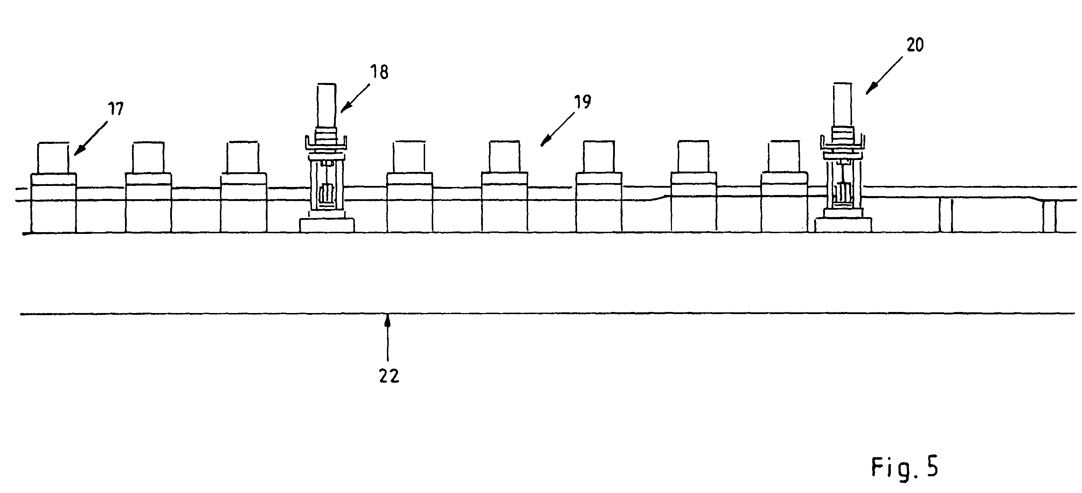

Aus Fig. 2 bis Fig. 5 ist eine erfindungsgemäße Vorrichtung für die Herstellung eines Profilteils 1 ersichtlich. Die Fig. 2 bis Fig. 4 schließen sich jeweils derart aneinander an, dass auf der rechten Seite von Fig. 2 die linke Seite von Fig. 3 anschließt und dass auf der rechten Seite von Fig. 3 die linke Seite von Fig. 4 anschließt.

Aus Fig. 2 ist eine Haspel 6 ersichtlich, von der ein Band 7, insbesondere ein Stahlband abgerollt werden kann. Das Stahlband durchläuft hinter der Haspel eine Bandschweißanlage 8, die gegebenenfalls Bänder 7 von unterschiedlichen Coils aneinander schweißen kann.

Im Anschluss an die Bandschweißanlage 8 ist in der erfindungsgemäßen Vorrichtung eine U-Profilierungseinheit 9 angeordnet, die entsprechend angeordnete horizontal und/oder vertikal ausgerichtete Walzen aufweist und das Band 7 zu einem U-profilierten Band 10 walzt (siehe dazu Fig. 3). Die Tiefe des U-Profils des U-profilierten Bandes 10 entspricht im wesentlichen der Tiefe des U-Profils des U-Profilteils 1 in Fig. 1b zuzüglich der Länge des umgebogenen Randes 5.

Im Anschluss an die U-Profilierungseinheit 9 ist in der erfindungsgemäßen Vorrichtung eine Prägeeinheit 11 angeordnet (siehe dazu Fig. 4). In der Prägeeinheit 11 wird das U-profilierte Band 10 nach Anhalten des Bandvorlaufs in einem mittleren Abschnitt 12 durch eine Prägestempel 13 nach oben gedrückt, so dass bei gleicher Tiefe des U-Profils der Boden des U-Profils in dem mittleren Abschnitt 12 gegenüber den beiden äußeren zu dem Abschnitt 12 benachbarten Abschnitten 14 in Fig. 4 angehoben ist.

Im Anschluss an die Prägeeinheit 11 ist in der erfindungsgemäßen Vorrichtung eine Besäumeinheit 15 vorgesehen, in der die oberen Enden der U-Schenkel des U-profilierten Bandes 10 gleichmäßig auf einer Höhe abgeschnitten werden, so dass die in der Prägeeinheit 11 hoch geprägten mittleren Abschnitte 12 nach dem Besäumen eine geringere Tiefe des U-Profils aufweisen als die zu dem jeweiligen mittleren Abschnitt 12 benachbarten äußeren Abschnitte 14.

Im Anschluss an die Besäumeinheit 15 ist in der erfindungsgemäßen Vorrichtung eine Hut-Profilierungseinheit 16 vorgesehen, mittels der die oberen Ränder der U-Schenkel des U-profilierten Bandes 10 derart umgebogen werden, dass ein Hut-Profil entsteht.

Im Anschluss an die Hut-Profilierungseinheit 16 sind in der erfindungsgemäßen Vorrichtung eine Stanzeinheit 17, daran anschließend eine Schere 18, daran anschließend eine weitere Stanzeinheit 19 und daran anschließend eine weitere Schere 20 angeordnet. In den Stanzeinheiten 17, 19 werden in das geprägte und Hut-profilierte Band 21 Bohrungen und Durchzüge eingebracht. Die Scheren 18, 20 dienen dazu, das geprägte und Hut-profilierte Band 21 in Profilteile 1 abzulängen. Hierbei ist insbesondere aus Fig. 4 ersichtlich, dass die Schere 18 ein Stück von dem geprägten und Hutprofilierten Band 21 abschneidet, das der doppelten Länge eines Profilteils 1 entspricht. Dieses abgeschnittene Stück wird von der Schere 20 in zwei gleich große Stücke geschnitten, die jeweils einem gewünschten Profilteil 1 entsprechen.

Aus Fig. 3, Fig. 4 und Fig. 5 ist ersichtlich, dass ein Großteil der erfindungsgemäßen Vorrichtung auf einem gemeinsamen Maschinenträger 22 angeordnet sein kann. In dem abgebildeten Ausführungsbeispiel sind die U-Profilierungseinheit 9, die Prägeeinheit 11, die Besäumeinheit 15, die Hut-Profilierungseinheit 16, die Stanzeinheiten 17, 19 und die Scheren 18, 20 auf einem gemeinsamen Maschinenträger 22 angeordnet. Es besteht erfindungsgemäß durchaus auch die Möglichkeit, mehr oder weniger Einheiten der erfindungsgemäßen Vorrichtung auf dem Maschinenträger 22 anzuordnen. Weiterhin besteht erfindungsgemäß die Möglichkeit, einzelne Teile, wie beispielsweise die Bandschweißanlage, nicht vorzusehen. Erfindungsgemäß ist weiterhin durchaus denkbar, nur eine Stanzeinheit und nur eine Schere oder mehr als zwei Stanzeinheiten und mehr als zwei Scheren vorzusehen.

Anstelle der Ausführung des erfindungsgemäßen Profilteils 1 als U-Profil besteht auch die Möglichkeit, andere Profilarten zu wählen, wie beispielsweise ein L-Profil, ein Z-Profil oder ein T-Profil. Weiterhin besteht auch die Möglichkeit, bei einem erfindungsgemäßen Profilteil abschnittsweise unterschiedliche Profilarten vorzusehen.

## Patentansprüche

1. Vorrichtung für die Herstellung eines länglichen Profilteiles (1), umfassend eine Prägeeinheit (11), in der ein Abschnitt eines zur Herstellung des Profilteiles (1) verwendeten profilierten Bandes (10) derart geprägt werden kann, dass der Abschnitt (12) gegenüber mindestens einem benachbarten Abschnitt (14) in einer Richtung senkrecht zur Längserstreckung des Bandes versetzt ist, **dadurch gekennzeichnet, dass** in Bearbeitungsrichtung vor der Prägeeinheit (11 ) eine Profilierungseinheit angeordnet ist, vermittels der aus einem flachen Band (7) durch Wälzen ein profiliertes Band (10) erzeugt werden kann, wobei in Bearbeitungsrichtung hinter der Prägeeinheit (11) eine Besäumeinheit (15) vorgesehen ist, mit der die Ränder der gegeneinander versetzten Abschnitte (12, 14) derart besäumt werden können, dass die gegeneinander versetzten Abschnitte (12, 14) einen unterschiedlichen Querschnitt aufweisen.

2. Vorrichtung nach Anspruch 1, **dadurch gekennzeichnet, dass** die Besäumeinheit (15) derart gestaltet ist, dass die oberen Ränder der gegeneinander versetzten Abschnitte (12, 14) auf im Wesentlichen gleicher Höhe abgeschnitten werden können.

3. Vorrichtung nach einem der Ansprüche 1 oder 2, **dadurch gekennzeichnet, dass** die Vorrichtung mindestens eine Stanzeinheit (17, 19) umfasst, mit der Bohrungen und/oder Durchzüge in das zu fertigende Profilteil (1) eingebracht werden können.

4. Vorrichtung nach einem der Ansprüche 1 bis 3, **dadurch gekennzeichnet, dass** die Vorrichtung mindestens eine Schere (18, 20) umfasst, mit der die zu fertigenden Profilteile (1) abgelängt werden können.

5. Vorrichtung nach einem der Ansprüche 1 bis 4, **dadurch gekennzeichnet, dass** die Vorrichtung eine Haspel (6) umfasst, von der ein Band (7) abgewickelt werden kann und insbesondere der Profilierungseinheit (U-Profilierungseinheit 9) zugeführt werden kann.

6. Vorrichtung nach Anspruch 5, **dadurch gekennzeichnet, dass** zwischen der Haspel (6) und der Profilierungseinheit (U-Profilierungseinheit 9) eine Bandschweißanlage (8) angeordnet ist, mit der einzelne Coils des Bandes (7) miteinander verschweißt werden können.

7. Vorrichtung nach einem der Ansprüche 1 bis 6, **dadurch gekennzeichnet, dass** das Profilteil (1) zumindest abschnittsweise als U-Profil und/oder L-Profil und/oder Z-Profil und/oder T-Profil ausgeführt ist.

8. Vorrichtung nach Anspruch 7, **dadurch gekennzeichnet, dass** das zumindest abschnittsweise einen im wesentlichen U-förmigen Querschnitt aufweisende Profilteil (1) über seine Längserstreckung mindestens zwei unterschiedliche Tiefen des U-Profil-Querschnitts aufweist, wobei in der Prägeeinheit (11) ein Abschnitt (12) eines zur Herstellung des Profilteils (1) verwendeten U-profilierten Bandes (10) derart geprägt werden kann, dass der Boden des U-Profils dieses Abschnittes (12) gegenüber dem Boden des U-Profils mindestens eines benachbarten Abschnittes (14) in der Richtung, in der sich die U-Schenkel des U-Profils von dessen Boden weg erstrecken, versetzt ist.

9. Vorrichtung nach Anspruch 8, **dadurch gekennzeichnet, dass** in Bearbeitungsrichtung der Vorrichtung hinter der Prägeeinheit (11 ) oder hinter der Besäumeinheit (15) eine Hut-Profilierungseinheit (16) vorgesehen ist, mit der die oberen Ränder der Schenkel des U-Profils des U-profilierten Bandes (10) umgebogen werden können, so dass insbesondere ein Hut-Profil entsteht.

10. Verfahren zur Herstellung eines länglichen Profilteils, bei dem in einem Verfahrensschritt ein profiliertes Band (10) abschnittsweise derart geprägt wird, dass mindestens zwei Abschnitte (12, 14) in einer Richtung senkrecht zur Längserstreckung des Bandes (10) gegeneinander versetzt sind, **dadurch gekennzeichnet, dass** vor dem Prägen aus einem flachen Band (7) durch Wälzen ein profiliertes Band (10) erzeugt wird und dass das profilierte Band (10) nach dem Prägen derart besäumt wird, dass die gegeneinander versetzten Abschnitte (12, 14) einen unterschiedlichen Querschnitt aufweisen.

11. Verfahren nach Anspruch 10, **dadurch gekennzeichnet, dass** das Profilteil (1) zumindest abschnittsweise einen im wesentlichen U-förmigen Querschnitt mit über seiner Längserstreckung mindestens zwei unterschiedlichen Tiefen des U-Profils aufweist, wobei ein U-profiliertes Band (10) abschnittsweise derart geprägt wird, dass die Böden des U-Profils in mindestens zwei Abschnitten (12, 14) gegeneinander versetzt sind.

12. Verfahren nach einem der Ansprüche 10 oder 11, **dadurch gekennzeichnet, dass** das profilierte Band (10) nach dem Prägen besäumt wird, insbesondere derart, dass die Ränder der U-Schenkel der Abschnitte (12, 14) mit gegeneinander versetzten Böden auf im wesentlichen gleicher Höhe abgeschnitten werden.

13. Verfahren nach einem der Ansprüche 11 oder 12, **dadurch gekennzeichnet, dass** das U-profilierte Band (10) nach dem Besäumen und/oder nach dem Prägen Hut-profiliert wird, insbesondere dadurch, dass die oberen Ränder der U-Schenkel des U-profilierten Bandes (10) umgebogen werden.

14. Verfahren nach einem der Ansprüche 10 bis 13, **dadurch gekennzeichnet, dass** das geprägte Band (21) mit Bohrungen und/oder Durchzügen versehen wird.

15. Verfahren nach einem der Ansprüche 10 bis 14, **dadurch gekennzeichnet, dass** das geprägte Band (21) in die zu erzeugenden Profilteile (1) abgelängt wird.

## Claims

1. Apparatus for the production of an elongate member (1), comprising a stamping unit (11 ), in which one section of a shaped strip (10) used for the production of the elongate member (1) can be stamped in such a way that the section (12) opposite to at least one adjacent section (14) is displaced vertically towards the longitudinal extension of the strip, **characterized in that** a shaping unit is positioned in the working direction ahead of the stamping unit (11), by means of which a shaped strip (10) can be manufactured by rolling a planar strip (7), where a bending unit (15) is provided in the working direction behind the stamping unit (11), by means of which the edges of the mutually displaced sections (12, 14) can be bent in such a way that the mutually displaced sections (12, 14) present a different cross-section.

2. Apparatus according to claim 1, **characterized in that** the bending unit (15) is formed in such a way that the upper edges of the mutually displaced sections (12, 14) can be cut essentially to the same height.

3. Apparatus according to one of the claims 1 or 2, **characterized in that** the apparatus includes at least one stamping unit (17, 19), by means of which holes and/or passages can be made in the elongate members (1) to be manufactured.

4. Apparatus according to one of the claims 1 to 3, **characterized in that** the device includes at least one shear (18, 20), by means of which the elongate member (1) to be manufactured can lengthened.

5. Apparatus according to one of the claims 1 to 4, **characterized in that** this apparatus includes a reel (6), from which a strip (7) can be unwound that can principally be conducted towards the shaping unit (U-shaped unit 9).

6. Apparatus according to claim 5, **characterized in that** a welding production line (8) is placed between the reel (6) and the shaping unit (U-shaped unit 9), by means of which the individual reaction coils of the strip (7) can be welded to each another.

7. Apparatus according to one of the claims 1 to 6, **characterized in that** the elongate member (1) is formed at least in sections as a T and/or Z and/or L shaped piece.

8. Apparatus according to claim 7, **characterized in that** the elongate member (1) comprising, at least in sections, an essentially U-shaped cross-section along its longitudinal extension, presents at least two different depths in the U-shaped cross-section, given that one section (12) of a U-shaped strip (10) used for the production of the elongate member (1) can be stamped in the stamping unit (11) in such a way that the lower part of the U-shaped profile of this section (12) located opposite the lower part of the U-shaped profile of at least one adjacent section (14) is displaced in the direction towards which the U-shaped arms of the U-shaped profile extend from its lower part.

9. Apparatus according to claim 8, **characterized in that** a shaping unit in the form of a hat (16) is provided in the working direction of the apparatus behind the stamping unit (11) or behind the bending unit (15), by means of which the upper edges of the arm of the U-shaped profile of the U-shaped strip (10) can be bent in such a way as to produce a hat-shaped profile.

10. Method for the production of an elongate member, a shaped strip (10) can be stamped in sections during a stage in the process in such a way that at least two sections (12, 14) are mutually displaced vertically with respect to the longitudinal extension of the strip (10), **characterized in that** a shaped strip (10) is produced from a planar strip (7) by rolling before being stamped and **in that** after stamping the shaped profile (19) is bent in such a way that the mutually displaced sections (12, 14) present a different cross-section.

11. Method according to claim 10, **characterized in that** the elongate member (1) shows at least in sections an essentially U-shaped cross-section with at least two different depths of the U-shaped profile on its longitudinal extension, where one U-shaped strip (10) is stamped in sections in such a way that the lower parts of the U-shaped profile are mutually displaced in at least two sections (12, 14).

12. Method according to one of claims 10 or 11 **characterized in that** the shaped strip (10) is bent after stamping, in particular in such a way that the edges of the U-shaped arms of the sections (12, 14) are cut substantially to the same height as the lower parts displaced mutually.

13. Method according to one of claims 11 or 12 **characterized in that** the U-shaped strip (10) will be shaped in the form of a hat after bending and/or after stamping, in particular by bending the upper edges of the U-shaped arms of the U-shaped strip (10).

14. Method according to one of claims 10 to 13, **characterized in that** the stamped strip (21) is provided with holes and/or passages.

15. Process according to one of claims 10 to 14, **characterized in that** the stamped strip (21) lengthens the elongate members (1) to be manufactured.

## Revendications

1. Dispositif de production d'un profilé allongé (1), comprenant une unité d'étampage (11), dans laquelle une section d'une bande profilée (10) employée pour la fabrication dudit profilé (1) peut être étampée de telle façon, que la section (12) qui est en face d'au moins une section adjacente (14) soit décalée en direction verticale vers l'extension longitudinale de la bande, **caractérisé en ce qu'**une unité de profilage est disposée dans la direction d'usinage devant l'unité d'étampage (11), grâce à laquelle on peut fabriquer une bande profilée (10) par roulement d'une bande plane (7), où une unité de courbure (15) est prévue dans la direction d'usinage derrière l'unité d'étampage (11), au moyen de laquelle on peut plier les bords des sections (12, 14) décalées entre elles, de telle façon que ces sections (12, 14) décalées entre elles présentent une section transversale différente.

2. Dispositif selon la revendication 1, **caractérisé en ce que** l'unité de courbure (15) est formée d'une manière telle, que les bords supérieurs des sections (12 14) décalées entre elles pourront être découpés essentiellement à la même hauteur.

3. Dispositif selon l'une des revendications 1 ou 2, **caractérisé en ce que** le dispositif comprend au moins une unité de poinçonnage (17, 19), au moyen de laquelle on peut réaliser des perforations et/ou des passages dans les profilés allongés (1) à fabriquer.

4. Dispositif selon l'une des revendications 1 à 3, **caractérisé en ce que** le dispositif comprend au moins une cisaille (18, 20), au moyen de laquelle on pourra allonger les profilés (1) à fabriquer.

5. Dispositif selon l'une des revendications 1 à 4, **caractérisé en ce que** le dispositif comprend un dévidoir à tambour (6), à partir duquel on peut dérouler une bande (7) qui peut être conduite principalement vers l'unité de profilage (unité profilée en U 9).

6. Dispositif selon la revendication 5, **caractérisé en ce qu'**une chaîne de soudage (8) est disposée entre le dévidoir (6) et l'unité de profilage (unité profilée en U 9), au moyen de laquelle on pourra souder les bobines de réactance individuelles de la bande (7) entre elles.

7. Dispositif selon l'une des revendications 1 à 6, **caractérisé en ce que** le profilé allongé (1) est formé au moins par sections en forme de pièce profilée en T et/ou en Z et/ou en L et/ou en U.

8. Dispositif selon la revendication 7, **caractérisé en ce que** le profilé allongé (1) qui comprend au moins par sections une section transversale essentiellement en forme de U le long de son extension, présente au moins deux profondeurs différentes de la section transversale profilée en U, ce qui fait qu'une section (12) d'une bande profilée en U (10) employée pour la fabrication de la forme profilée (1) peut être étampée dans l'unité d'étampage (11) d'une façon telle, que la partie inférieure du profilé en U de cette section (12) située en face de la partie inférieure du profilé en U d'au moins une section adjacente (14) est décalée dans la direction vers laquelle s'étendent les ailes en forme de U du profilé en U depuis de sa partie inférieure.

9. Dispositif selon la revendication 8, **caractérisé en ce que** dans la direction d'usinage du dispositif derrière l'unité d'étampage (11) ou derrière l'unité de courbure (15) est prévue une unité profilée en forme de chapeau (16), au moyen de laquelle les bords supérieurs des ailes du profilé en U de la bande profilée en U (10) pourront être repliés de manière à produire un profilé en forme de chapeau.

10. Procédé de fabrication d'un profilé allongé, une bande profilée (10) peut être étampée par sections lors d'une étape du procédé d'une façon telle, qu'au moins deux sections (12, 14) soient décalées entre elles en direction verticale par rapport à l'extension longitudinale de la bande (10), **caractérisé en ce qu'**une bande profilée (10) est fabriquée à partir d'une bande plane (7) par roulement avant d'être étampée et que la bande profilée (19) après l'étampage est pliée de telle manière, que les sections (12, 14) décalées entre elles présentent une section transversale différente.

11. Procédé selon la revendication 10, **caractérisé en ce que** le profilé allongé (1) présente au moins par sections une section transversale essentiellement en forme de U avec au moins deux profondeurs différentes du profilé en U sur son extension longitudinale, où une bande profilée en U (10) est étampé par sections de telle manière, que les parties inférieures du profilé en U soient décalés entre elles au moins dans deux sections (12, 14).

12. Procédé selon l'une des revendications 10 ou 11, **caractérisé en ce que** la bande profilée (10) est pliée après l'étampage, en particulier d'une manière telle, que les bords des ailes, en forme de U des sections (12, 14) soient coupés essentiellement à la même hauteur que les parties inférieures décalées entre elles.

13. Procédé selon l'une des revendications 11 ou 12, **caractérisé en ce que** la bande profilée en U (10) sera profilée en forme de chapeau après avoir été pliée et /ou après l'étampage, en particulier en repliant les bords supérieurs des ailes en forme de U de la bande profilée en U (10).

14. Procédé selon l'une des revendications 10 à 13, **caractérisé en ce que** la bande étampée (21) est pourvue de perforations et/ou de passages.

15. Procédé selon l'une des revendications 10 à 14, **caractérisé en ce que** la bande étampée (21) allonge les profilés (1) à fabriquer.
